# EUROPÄISCHE PATENTSCHRIFT

(11) **EP 2 337 727 B1**
(45) Veröffentlichungstag und Bekanntmachung des Hinweises auf die Patenterteilung: **27.06.2012**
(21) Anmeldenummer: 09778478.9
(22) Anmeldetag: 08.09.2009
(51) Int. Cl.: B62D 5/04

(54) **SERVO-LENKSYSTEM UND VERFAHREN ZUM BETREIBEN EINES SERVO-LENKSYSTEMS**
SERVO STEERING SYSTEM AND METHOD FOR OPERATING A SERVO STEERING SYSTEM
SYSTÈME DE DIRECTION ASSISTÉE ET PROCÉDÉ POUR FAIRE FONCTIONNER UN SYSTÈME DE DIRECTION ASSISTÉE

(30) Priorität: 17.09.2008 DE 102008047772
(43) Veröffentlichungstag der Anmeldung: 29.06.2011
(73) Patentinhaber: Volkswagen AG, 38436 Wolfsburg (DE); Audi AG, 85045 Ingolstadt (DE)
(72) Erfinder: HAUSSMANN, Heiko, 38118 Braunschweig (DE); BUSSE, Carsten, 38444 Wolfsburg (DE); SCHOTTLER, Frank, 38102 Braunschweig (DE); MÜLLER Rolf, 85055 Ingolstadt, (DE); SCHULLER Jürgen Dr., 85055 Ingolstadt, (DE)
(86) Internationale Anmeldenummer: PCT/EP2009/006601
(87) Internationale Veröffentlichungsnummer: WO 2010/031520

(56) Entgegenhaltungen:
- EP-A2- 0 572 961
- EP-A2- 1 588 924
- DE-A1- 10 052 343
- DE-A1-102005 044 629
- US-A1- 2002 022 914

## Beschreibung

Die Erfindung betrifft ein Servo-Lenksystem und ein Verfahren zum Betreiben eines Servo-Lenksystems.

Servo-Lenksysteme sind in vielfältigen Ausprägungen bekannt. Gemeinsam ist allen Ausführungsformen, dass ein Servo-Antrieb ein zusätzliches Lenkmoment auf die zu lenkenden Räder aufbringt. Hierzu wertet ein Steuergerät eingehende Signale aus und erzeugt Steuersignale für den Servo-Antrieb, der beispielsweise als Elektromotor ausgebildet ist.

Servo-Lenksysteme stellen sicherheitsrelevante Systeme in einem Kraftfahrzeug dar. Daher muss im Fehlerfall sichergestellt werden, dass es nicht zu unkontrollierten Lenkbewegungen kommt.

Ein Ansatz zum Sicherstellen des einwandfreien Betriebes eines solchen Servo-Lenksystems ist ein so genanntes 3-Ebenen-Überwachungskonzept. Dabei werden die ersten beiden Ebenen in einem Haupt-Rechner des Steuergerätes realisiert und die dritte Ebene durch einen externen Überwachungsrechner. Die erste Ebene ist eine Funktionsüberwachung der Lenkfunktionen im Haupt-Rechner. Die zweite Ebene stellt eine interne Überwachungseinheit im Haupt-Rechner dar, die den Haupt-Rechner überwacht. Die dritte Ebene wird wie bereits ausgeführt durch den externen Überwachungsrechner gebildet, der die interne Überwachungseinheit des Haupt-Rechners überwacht. Sowohl der Haupt-Rechner als auch der externe Überwachungsrechner haben dabei Zugriff auf mindestens einen Abschaltpfad des Servo-Lenksystems, um im Fehlerfall das Servo-Lenksystem abzuschalten.

Die Einstufung von Servo-Lenksystemen als ASIL-D macht eine "Fail-Sale"-Auslegung notwendig. Parallel zu dieser Anforderung sollen aber auch plötzliche Abschalter mit einem Sicherheitsziel ASIL-C vermieden werden.

Aus der US 2002/0022914 A1 ist eine Steuerungseinheit für eine elektrische Servolenkung bekannt, die einen Haupt-Rechner und einen Neben-Rechner aufweist. Sowohl Haupt-Rechner als auch Neben-Rechner weisen zwei Watchdog Timer auf, von denen jeweils einer zur Überwachung des Rechners und einer zur Überwachung des jeweils anderen Rechners dient.

Der Erfindung liegt daher das technische Problem zugrunde, ein Servo-Lenksystem zu schaffen sowie ein Verfahren zum Betreiben eines solchen Servo-Lenksystems bereitzustellen, bei dem die Anzahl plötzlicher Abschalter reduziert wird.

Die Lösung des technischen Problems ergibt sich durch die Gegenstände mit den Merkmalen der Ansprüche 1 und 5. Weitere vorteilhafte Ausgestaltungen der Erfindung ergeben sich aus den Unteransprüchen.

Hierzu umfasst das Servo-Lenksystem ein Steuergerät mit einem Haupt-Rechner und einen externen Überwachungsrechner, wobei der Haupt-Rechner aus Eingangssignalen Steuersignale für einen Servo-Antrieb berechnet, wobei der Haupt-Rechner eine Funktionsüberwachung der Lenkfunktionen und eine interne Überwachungseinheit zur Überwachung der Funktion des Haupt-Rechners aufweist, wobei die Überwachungseinheit des Haupt-Rechners durch den externen Überwachungsrechner überwacht wird, wobei sowohl der Haupt-Rechner als auch der externe Überwachungsrechner Zugriff auf mindestens einen Abschaltpfad des Servo-Lenksystems haben, um im Fehlerfall das Servo-Lenksystem abzuschalten, wobei im Fehlerfall des externen Überwachungsrechners der Zugang des Überwachungsrechners zum Abschaltpfad gesperrt wird und der Haupt-Rechner einen eingeschränkten Betrieb des Servo-Lenksystems gewährleistet. Dabei wird ausgenutzt, dass im Fehlerfall des Überwachungsrechners der Haupt-Rechner im Regelfall noch einwandfrei arbeitet, da ansonsten dieser bereits über den Abschaltpfad die Servo-Lenkung abgeschaltet hätte. Daher kann das Servo-Lenksystem eingeschränkt weiter betrieben werden und ein plötzlicher Abschalter wird vermieden. Dabei sei angemerkt, dass die Bezeichnung externer Überwachungsrechner im Vergleich zum Haupt-Rechner zu verstehen ist, es sich also um separate Hardware-Einheiten handelt. Dabei kann jedoch der externe Überwachungsrechner auch im Steuergerät des Haupt-Rechners angeordnet sein. Alternativ können das Steuergerät und der Überwachungsrechner in einem gemeinsamen Gehäuse angeordnet sein. Schließlich kann der externe Überwachungsrechner auch völlig separat zum Steuergerät angeordnet sein.

Vorzugsweise wird der Betrieb des Servo-Lenksystems zeitlich und/oder funktional beschränkt. Zeitlich kann die Beschränkung beispielsweise dadurch erfolgen, dass der Kraftfahrzeugführer darüber informiert wird, dass ihm die Servo-Lenkung nur noch eine bestimmte Zeit (beispielsweise drei Minuten) zur Verfügung steht, um anschließend abgeschaltet zu werden. Somit hat der Kraftfahrzeugführer ausreichend Zeit, das Kraftfahrzeug unter Beibehaltung der Servo-Lenkung sicher am Straßenrand abzustellen. Funktional kann die Beschränkung darin bestehen, dass einzelne Lenkfunktionen gar nicht oder nur im beschränkten Leistungsumfang durchgeführt werden.

In einer weiteren bevorzugten Ausführungsform wechselt der Haupt-Rechner bei Ausfall eines Anfragesignals des Überwachungsrechners in den eingeschränkten Betrieb. Hierdurch muss nacht aktiv der Haupt-Rechner über den Ausfall des Überwachungsrechners informiert werden, da letzterer dazu je nach Schwere des Fehlers nicht mehr in der Lage sein könnte.

In einer weiteren bevorzugten Ausführungsform ist im Abschaltpfad des Überwachungsrechners ein Relais angeordnet, dessen Ansteuerung durch den Überwachungsrechner unterbunden wird oder ist. Hierdurch kann der Abschaltpfad des Überwachungsrechners auch galvanisch getrennt werden, so dass Rückwirkungen vom Überwachungsrechner wirksam unterbunden werden, indem das Relais geöffnet wird. Dabei kann vorgesehen sein, dass das Relais ausschließlich über eine separate Logik ansteuerbar ist, wobei im Normalzustand das Relais geschlossen ist und im Fehlerfall von der Logik geöffnet wird.

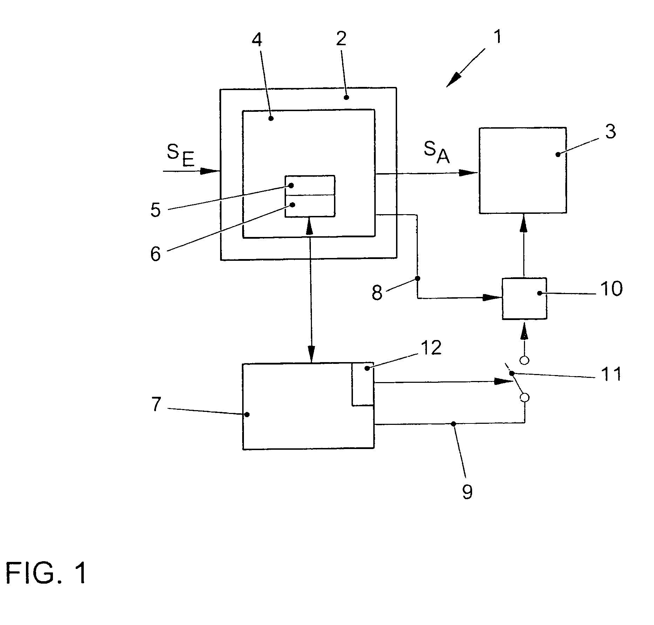

Die Erfindung wird nachfolgend anhand eines bevorzugten Ausführungsbeispieles näher erläutert. Die einzige Figur zeigt ein schematisches Blockschaltbild eines Teils eines Servo-Lenksystems.

Das Servo-Lenksystem 1 umfasst ein Steuergerät 2 und einen Servo-Motor 3. Das Steuergerät 2 umfasst einen Haupt-Rechner 4, der mit einer Funktionsüberwachung 5 für die Lenkfunktionen und einer Überwachungseinheit 6 zur Überwachung der Funktion des Haupt-Rechners 4 ausgebildet ist. Die Überwachungseinheit 6 ist bidirektional mit einem externen Überwachungsrechner 7 verbunden, der die Überwachungseinheit 6 überwacht. Sowohl der Haupt-Rechner 4 als auch der Überwachungsrechner 7 sind mit einem Abschaltpfad 8, 9 verbunden, die über eine Logik 10 zusammengeführt sind. Im Abschaltpfad 9 ist darüber hinaus ein Relais 11 angeordnet, das von einer separaten Logik 12 angesteuert wird.

Der Haupt-Rechner 4 erzeugt aus Eingangssignalen S_{E} geeignete Steuersignale S_{A} für den Servo-Motor 3. Erfasst nun beispielsweise die Funktionsüberwachung 5 oder die Überwachungseinheit 6 einen Fehler, so wird ein Abschaltsignal über den Abschaltpfad 8 übertragen und die Servo-Lenkung 1 abgeschaltet, indem beispielsweise der Servo-Motor 3 abgeschaltet wird. Aufgrund der Tatsache, dass bei einem schweren Fehler des Haupt-Rechners 4 dieser gegebenenfalls dieses Abschaltsignal nicht mehr selbst erzeugen kann, ist der redundante Abschaltpfad 9 für den Überwachungsrechner 7 vorgesehen.

Die Überwachung der Überwachungseinheit 6 durch den externen Überwachungsrechner 7 erfolgt vorzugsweise durch eine Frage-Antwort-Kommunikation, d.h. der Überwachungsrechner 7 fragt den Zustand der Überwachungseinheil 6 ab und diese antwortet dem Überwachungsrechner 7.

Erfindungsgemäß soll nun verhindert werden, dass bei einem Fehler im Überwachungsrechner 7 die Servo-Lenkung 1 abrupt abgeschaltet wird. Hierzu finden zwei Prozesse statt, die vorzugsweise völlig getrennt voneinander erfolgen.

Der eine Schritt ist die Unterbindung eines Zugriffs des Überwachungsrechners 7 auf den Abschaltpfad 9. Hierzu prüft die Logik 12, ob im Überwachungsrechner 7 ein Zustand aufgetreten ist, der zur Generierung eines Reset-Signals für den Überwachungsrechner führen wird. Ist dies der Fall, so steuert die Logik 12 das Relais 11 an, so dass der Schalter des Relais 11 geöffnet wird. Damit ist der Abschaltpfad 9 deaktiviert. Parallel hierzu erfasst die Überwachungseinheit 6 ein Ausbleiben des Anfragesignals des Überwachungsrechners 7, entweder weil dieser aufgrund des Fehlers oder spätestens aufgrund des durchgeführten Resets kein Anfragesignal absenden kann. Bei einem Ausbleiben des Anfragesignals wird vom Haupt-Rechner 4 auf einen Ausfall des Überwachungsrechners 7 geschlossen. Als Reaktion darauf führt dann der Haupt-Rechner 4 einen zeitlich und/oder funktional eingeschränkten Betrieb der Servo-Lenkung 1 fort. Bezüglich der Logik 10 ist anzumerken, dass diese nur symbolisieren soll, dass die beiden Abschaltpfade 8, 9 entsprechend einer Oder-Verknüpfung wirken, d.h. diese können auch getrennt zum Servo-Motor 3 geführt werden und voneinander unabhängig diesen abschalten.

## Patentansprüche

1. Servo-Lenksystem (1), umfassend ein Steuergerät (2) mit einem Haupt-Rechner (4) und einen externen Überwachungsrechner (7), wobei der Haupt-Rechner (4) aus Eingangssignalen (S_{E}) Steuersignale (S_{A}) für einen Servo-Antrieb berechnet, wobei der Haupt-Rechner (4) eine Funktionsüberwachung (5) der Lenkfunktionen und eine interne Überwachungseinheit (6) zur Überwachung der Funktion des Haupt-Rechners (4) aufweist, wobei die Überwachungseinheit (6) des Haupt-Rechners (4) durch den externen Überwachungsrechner (7) überwacht wird, wobei sowohl der Haupt-Rechner (4) als auch der externe Überwachungsrechner (7) Zugriff auf mindestens einen Abschaltpfad (8, 9) des Servo-Lenksystems (1) haben, um im Fehlerfall das Servo-Lenksystem (1) abzuschalten,
**dadurch gekennzeichnet, dass**
im Fehlerfall des externen Überwachungsrechners (7) der Zugang des Überwachungsrechners (7) zum Abschaltpfad (9) gesperrt wird und der Haupt-Rechner (4) einen eingeschränkten Betrieb des Servo-Lenksystems (1) gewährleistet.

2. Servo-Lenksystem nach Anspruch 1, **dadurch gekennzeichnet, dass** der Betrieb des Servo-Lenksystems (1) zeitlich und/oder funktional beschränkt wird.

3. Servo-Lenksystem nach Anspruch 1 oder 2, **dadurch gekennzeichnet, dass** der Haupt-Rechner (4) bei Ausfall eines Anfragesignals des Überwachungsrechners (7) in den eingeschränkten Betrieb wechselt.

4. Servo-Lenksystem nach einem der vorangegangenen Ansprüche, **dadurch gekennzeichnet, dass** im Abschaltpfad (9) des Überwachungsrechners (7) ein Relais (11) angeordnet ist, dessen Ansteuerung durch den Überwachungsrechner (7) unterbunden wird.

5. Verfahren zum Betreiben eines Servo-Lenksystems (1), mittels einem Steuergerät (2) mit einem Haupt-Rechner (4) und einem externen Überwachungsrechner (7), wobei der Haupt-Rechner (4) aus Eingangssignalen (S_{E}) Steuersignale (S_{A}) für einen Servo-Antrieb berechnet, wobei der Haupt-Rechner (4) eine Funktionsüberwachung (5) der Lenkfunktionen und eine interne Überwachungseinheit (6) zur Überwachung der Funktion des Haupt-Rechners (4) aufweist, wobei die Überwachungseinheit (6) des Haupt-Rechners (4) durch den externen Überwachungsrechner (7) überwacht wird, wobei sowohl der Haupt-Rechner (4) als auch der externe Überwachungsrechner (7) Zugriff auf mindestens einen Abschaltpfad (8, 9) des Servo-Lenksystems (1) haben, um im Fehlerfall das Servo-Lenksystem (1) abzuschalten,
**dadurch gekennzeichnet, dass**
im Fehlerfall des externen Überwachungsrechners (7) der Zugang des Überwachungsrechners (7) zum Abschaltpfad (9) gesperrt wird und der Haupt-Rechner (4) einen eingeschränkten Betrieb des Servo-Lenksystems (1) gewährleistet.

6. Verfahren nach Anspruch 5, **dadurch gekennzeichnet, dass** der Betrieb des Servo-Lenksystems (1) zeitlich und/oder funktional beschränkt wird.

7. Verfahren nach Anspruch 5 oder 6, **dadurch gekennzeichnet, dass** der Haupt-Rechner (4) bei Ausfall eines Anfragesignals des Überwachungsrechners (7) in den eingeschränkten Betrieb wechselt.

8. Verfahren nach einem der Ansprüche 5 bis 7, **dadurch gekennzeichnet, dass** im Abschaltpfad (9) des Überwachungsrechners (7) ein Relais (11) angeordnet ist, dessen Ansteuerung durch den Überwachungsrechner (7) unterbunden wird.

## Claims

1. Servo steering system (1) comprising a controller (2) with a main computer (4) and an external monitoring computer (7), wherein the main computer (4) calculates control signals (S_{A}) for a servo drive from input signals (S_{E}), wherein the main computer (4) has a function monitoring means (5) for the steering functions and an internal monitoring unit (6) for monitoring the function of the main computer (4), wherein the monitoring unit (6) of the main computer (4) is monitored by the external monitoring computer (7), wherein both the main computer (4) and the external monitoring computer (7) have access to at least one switch-off path (8, 9) of the servo steering system (1) in order to switch off the servo steering system (1) in the event of a fault,
**characterized in that**
in the event of a fault in the external monitoring computer (7) the access of the monitoring computer (7) to the switch-off path (9) is blocked and the main computer (4) ensures restricted operation of the servo steering system (1).

2. Servo steering system according to Claim 1, **characterized in that** the operation of the servo steering system (1) is restricted chronologically and/or functionally.

3. Servo steering system according to Claim 1 or 2, **characterized in that** the main computer (4) changes into the restricted operating mode when an interrogation signal of the monitoring computer (7) fails to occur.

4. Servo steering system according to one of the preceding claims, **characterized in that** a relay (11) whose actuation is prevented by the monitoring computer (7) is arranged in the switch-off path (9) of the monitoring computer (7).

5. Method for operating a servo steering system (1) by means of a controller (2) with a main computer (4) and an external monitoring computer (7), wherein the main computer (4) calculates control signals (S_{A}) for a servo drive from input signals (S_{E}), wherein the main computer (4) has a function monitoring means (5) for the steering functions and an internal monitoring unit (6) for monitoring the function of the main computer (4), wherein the monitoring unit (6) of the main computer (4) is monitored by the external monitoring computer (7), wherein both the main computer (4) and the external monitoring computer (7) have access to at least one switch-off path (8, 9) of the servo steering system (1) in order to switch off the servo steering system (1) in the event of a fault,
**characterized in that**
in the event of a fault in the external monitoring computer (7) the access of the monitoring computer (7) to the switch-off path (9) is blocked and the main computer (4) ensures restricted operation of the servo steering system (1).

6. Method according to Claim 5, **characterized in that** the operation of the serve steering system (1) is restricted chronologically and/or functionally.

7. Method according to Claim 5 or 6, **characterized in that** the main computer (4) changes into the restricted operating mode when an interrogation signal of the monitoring computer (7) fails to occur.

8. Method according to one of Claims 5 to 7, **characterized in that** a relay (11) whose actuation is prevented by the monitoring computer (7) is arranged in the switch-off path (9) of the monitoring computer (7).

## Revendications

1. Système de servodirection (1) comprenant un appareil de commande (2) doté d'un calculateur principal (4) et d'un calculateur externe de surveillance (7),
le calculateur principal (4) calculant à partir de signaux d'entrée (S_{E}) des signaux de commande (S_{A}) pour un servo-entraînement,
le calculateur principal (4) présentant une surveillance (5) des fonctions de braquage et une unité interne de surveillance (6) qui surveille le fonctionnement du calculateur principal (4),
l'unité de surveillance (6) du calculateur principal (4) étant surveillée par le calculateur externe de surveillance (7),
tant le calculateur principal (4) que le calculateur externe de surveillance (7) pouvant accéder à au moins un parcours de débranchement (8, 9) du système de servodirection (1) pour débrancher le système de servodirection (1) en cas de défaut, **caractérisé en ce que**
en cas de défaut du calculateur externe de surveillance (7), l'accès du calculateur de surveillance (7) au parcours de débranchement (9) est bloqué et le calculateur principal (4) assure un fonctionnement restreint du système de servodirection (1) .

2. Système de servodirection selon la revendication 1, **caractérisé en ce que** le fonctionnement du système de servodirection (1) est limité dans le temps et/ou fonctionnellement.

3. Système de servodirection selon les revendications 1 ou 2, **caractérisé en ce que** le calculateur principal (4) bascule en fonctionnement restreint en cas de défaillance d'un signal d'interrogation du calculateur de surveillance (7).

4. Système de servodirection selon l'une des revendications précédentes, **caractérisé en ce qu'**un relais (11) dont l'activation est contrôlée par le calculateur de surveillance (7) est disposé dans le parcours de débranchement (9) du calculateur de surveillance (7).

5. Procédé d'utilisation d'un système de servodirection (1) au moyen d'un appareil de commande (2) doté d'un calculateur principal (4) et d'un calculateur externe de surveillance (7),
le calculateur principal (4) calculant à partir de signaux d'entrée (S_{E}) des signaux de commande (S_{A}) pour un servo-entraînement,
le calculateur principal (4) présentant une surveillance (5) des fonctions de braquage et une unité interne de surveillance (6) qui surveille le fonctionnement du calculateur principal (4),
l'unité de surveillance (6) du calculateur principal (4) étant surveillée par le calculateur externe de surveillance (7),
tant le calculateur principal (4) que le calculateur externe de surveillance (7) pouvant accéder à au moins un parcours de débranchement (8, 9) du système de servodirection (1) pour débrancher le système de servodirection (1) en cas de défaut, **caractérisé en ce que**
en cas de défaut du calculateur externe de surveillance (7), l'accès du calculateur de surveillance (7) au parcours de débranchement (9) est bloqué et le calculateur principal (4) assure un fonctionnement restreint du système de servodirection (1).

6. Procédé selon la revendication 5, **caractérisé en ce que** le fonctionnement du système de servodirection (1) est limité dans le temps et/ou fonctionnellement.

7. Procédé selon les revendications 5 ou 6, **caractérisé en ce que** le calculateur principal (4) bascule en fonctionnement restreint en cas de défaillance d'un signal d'interrogation du calculateur de surveillance (7).

8. Procédé selon l'une des revendications 5 à 7, **caractérisé en ce qu'**un relais (11) dont l'activation est contrôlée par le calculateur de surveillance (7) est disposé dans le parcours de débranchement (9) du calculateur de surveillance (7).
